# EUROPEAN PATENT APPLICATION

(11) **EP 1 710 405 A1**
(43) Date of publication of application: **11.10.2006**
(21) Application number: 06005133.1
(22) Date of filing: 14.03.2006
(51) Int. Cl.: F01N 1/00, F01N 3/021, F01N 3/033, F01N 3/04

(54) **Silencer for trapping particulates by using water**

(30) Priority: 31.03.2005 IT PR20050013
(71) Applicant: Petrolini, Antonio, 43100 Parma (IT)
(72) Inventor: Petrolini, Antonio, 43100 Parma (IT)
(74) Representative: Guareschi, Antonella

(57) **Abstract**

The invention relates to the field of systems and apparatus for reducing the atmospheric pollution of explosion engines and in particular it refers to a particulate holding device operating as silencer which holds therein the particulates produced by the engine by emitting water inside the exhaust engine pipe; such water is atomised and mixed with exhaust gases.

Water is atomised inside a mixing sleeve (A); a throttling (C) increases the exhaust gas pressure passing therein and a multi-layer grid (D) allows the particulates mixed with water to become sticky.

## Description

Currently, on all motor vehicles with explosion engine silencers (mufflers) are assembled and are used only for dampening the noise generated by the engine.

Main object of the present invention is providing a silencer, which holds therein the particulates expelled from the engine.

The operating characteristics will be clear from the detailed description which follows.

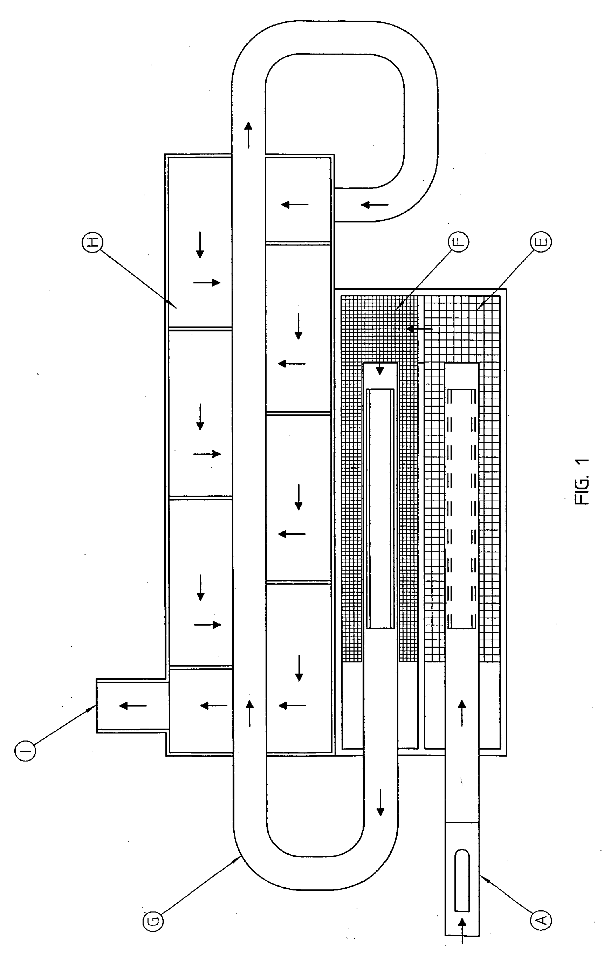

Fig. 1 shows the invention without its upper cover in order to better point out the various passage of exhaust gases produced by the engine.

The above invention is linked to the flexible joint which can be found after the catalyst through sleeve A in figure 1.

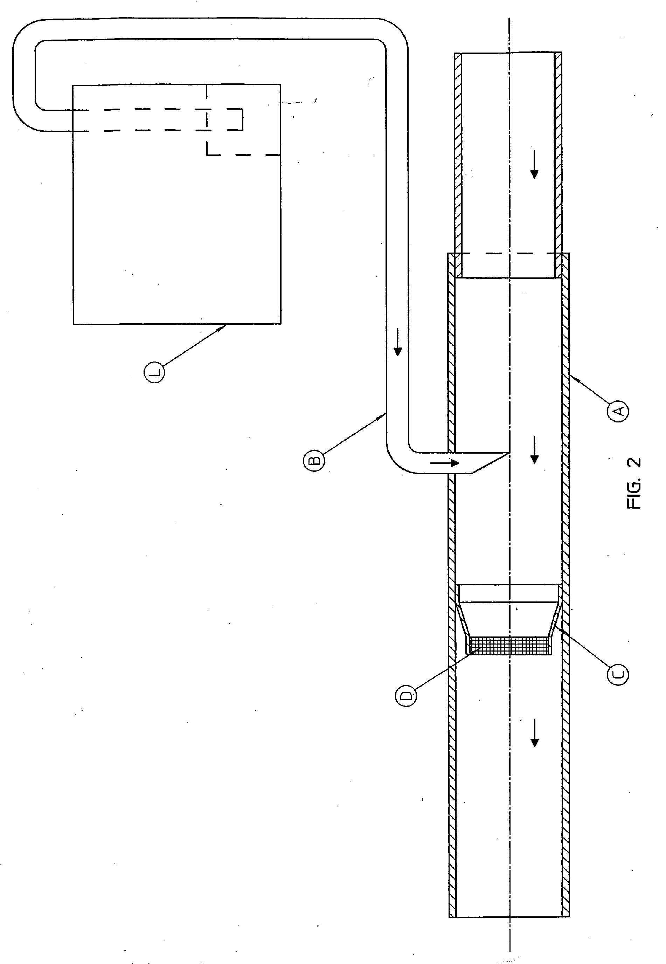

The operation of what is stated above consists in entering water inside mixing sleeve A through pipe B shown in fig. 2.

Water emission into sleeve A occurs through pipe B connected to a pump placed inside the tank L which will be placed in the most adequate part of the vehicle.

The above pump operates when the vehicle is started.

Water in contact with exhaust gases will tend to atomise and will be mixed with the particulates, which in turn will find a throttling C which is used for increasing the exhaust gas pressure: at the end of such throttling, there is a multi-layer grid D which, passing through it, will allow the particulates previously mixed with water to become sticky.

At that time, there will be sticky particulate particles in suspension in the exhaust gases entering sector E through the pipe connected to the sleeve A; such pipe inside sector E has a slotted opening towards the sector bottom which allows the exhaust gases to go out of it with lower pressure; these gases will find a multi-layer grid which is used to hold the majority of particulates which have been previously made sticky.

Following this, exhaust gases enter sector F.

In this sector, there is a multi-layer grid with smaller holes than the previous one, which will allow holding the particulates gone out of sector E.

The exhaust gas outlet from this sector occurs through pipe G which has an upward oriented slotted opening, which will convey them into sector H; in this sector, by looking at fig 1, it will be seen that pipe G crosses it for its whole length in order to be then connected thereto; inside it, there are half-bulkheads which compel the exhaust gases to follow a compulsory path, see arrows in fig. 1, in order to then go out of pipe I whose diameter is greater than the inlet pipe A which allows reducing the pressure inside sectors E, F, H.

The above sector H is used for holding micro-particles of particulates being present in the steam. The invention as a whole is made of stainless steel.

Since it is not a filter, it does not need particular maintenance operations.

It can be washed inside with detergent products or with boiling water.

Water entered in sleeve A will be batched depending on displacement and fuel used in the vehicle.

Finally, it must be underlined that, with the process of the invention, particulates emitted from an explosion engine are held by entering water into the exhaust duct, which water, when atomising, is mixed with exhaust gases, making the particulates sticky.

## Claims

1. Particulate holding device **characterised in that** it operates as silencer and the particulates produced by the engine are held therein by entering water inside the exhaust engine pipe, said water being atomised and mixed with exhaust gases.

2. Particulate holding device according to claim 1, **characterised in that** it comprises a mixing sleeve (A) within which water is atomised, a throttling (C) which increases the pressure of exhaust gases passing therein, a multi-layer grid (D) which allows the particulates mixed with water to become sticky.

3. Particulate holding device according to claim 1, **characterised in that** it comprises a water entering pipe (B) connected to a pump inside a tank (L) placed in a suitable vehicle part.

4. Particulate holding device according to claim 3, **characterised in that** the pump operates when the engine is started up.

5. Particulate holding device according to claim 1, **characterised in that** water entered into the sleeve (A) will be batched depending on displacement and fuel used in the vehicle.

6. Particulate holding device according to claim 1, **characterised in that** it comprises a sector (E) inside which a slotted opening towards the sector (E) bottom allows exhaust gases to go out with less pressure, said gases encountering a multi-layer grid which is used to hold the majority of particulates previously made sticky, afterwards said gases entering a sector (F).

7. Particulate holding device according to claim 1 and 6, **characterised in that** it comprises a pipe (G) with slotted opening to aid exhaust gases to go out of sector (F), said slotted opening being upward oriented along a direction of a sector (H).

8. Particulate holding device according to claim 7, **characterised in that** sector (H) is crossed for all its length by pipe (G) and afterwards it is connected again to pipe (G).

9. Particulate holding device according to claim 1 and 6, **characterised in that** inside sector (G) half-bulkheads compel exhaust gases to follow a compulsory path and afterwards to go out of a pipe (I) whose diameter is greater than the inlet pipe (A) diameter.

10. Process for holding particulates emitted by an explosion engine **characterised in that** it inserts water in the exhaust duct, which water by atomising is mixed with exhaust gases, making the particulates sticky.
